# FASCICULE DE BREVET EUROPEEN

(11) **EP 0 808 296 B1**
(45) Date de publication et mention de la délivrance du brevet: **02.12.1998**
(21) Numéro de dépôt: 96901409.1
(22) Date de dépôt: 18.01.1996
(51) Int. Cl.: C04B 28/04

(54) **COMPOSITION DE LIANT POUR LA FABRICATION D'UN MATERIAU DE CONSTRUCTION**
BINDEMITTELZUSAMMENSETZUNG ZUR HERSTELLUNG EINES BAUMATERIALS
BINDER COMPOSITION FOR MAKING A BUILDING MATERIAL

(30) Priorité: 10.02.1995 FR 9501737
(43) Date de publication de la demande: 26.11.1997
(73) Titulaire: LEROY, Pierre, 59131 Rousies (FR)
(72) Inventeur: LEROY, Pierre, 59131 Rousies (FR)
(74) Mandataire: Ecrepont, Robert Pierre
(86) Numéro de dépôt international: FR9600079
(87) Numéro de publication internationale: WO9624565

(56) Documents cités:
- EP-A- 0 525 194
- EP-A- 0 534 857
- WO-A-93/21122
- BE-A- 376 185
- DE-A- 3 105 054
- FR-A- 2 520 349
- FR-A- 2 584 707
- GB-A- 799 545
- "Gmelins Handbuch der Anorganischen Chemie, Vol. 28a, Calcium" , VERLAG CHEMIE GMBH , WEINHEIM DE XP002002642 voir page 215, dernier alinéa

## Description

L'invention se rapporte à une composition de liant pour la fabrication d'un matériau de construction réalisé à base de granulats de roche naturelle.

L'invention se rapporte plus particulièrement mais non exclusivement à une composition de liant pour la réalisation d'un matériau de construction à base de granulats de roche de couleur bleue.

La réalisation d'une pierre dite artificielle suppose généralement l'assemblage de granulats au moyen d'un liant.

Dans le domaine de la fabrication de matériaux de construction, il existe différents matériaux qu'on qualifie de pierre artificielle et qui sont constitués par assemblage de granulats au moyen d'un liant.

Par exemple, les documents FR-A-2.584.707, FR-A-2.520.349, FR-A-2.686.112, sont relatifs, d'une part, à la nature et aux proportions des ingrédients qui interviennent pour constituer la masse granulaire et le liant et, d'autre part, aux conditions de leur mise en présence.

Les techniques décrites dans ces documents ne conviennent pas pour l'obtention du résultat visé par l'invention à savoir la réalisation d'un matériau s'apparentant à de la pierre bleue, c'est à dire de la pierre de taille obtenue par découpe de blocs provenant de carrières ouvertes dans un gisement Givetien.

L'invention a pour objet une composition de liant pour la fabrication d'un matériau de construction qui, réalisé à base de granulats de roche naturelle, s'apparente à de la pierre bleue.

A cet effet, l'invention est caractérisée en ce que, d'une part, le liant comprend des particules qui, dites fines, résultent du concassage de la roche utilisée pour la production des granulats et, d'autre part, le liant met en oeuvre un ciment composé :
- de clinkers qui, notamment constitués de chaux vive, de silice, d'alumine, d'oxyde de fer, de magnésie, entrent dans la composition du ciment dans une proportion de sa masse comprise entre 36 et 57 %,
- de laitier qui, notamment constitué de chaux vive, de silice, d'alumine, entre dans la composition du ciment dans une proportion de sa masse comprise entre 15 et 27 %,
- de pouzzolanes qui, constitués à base d'une roche sédimentaire silico-alumino-calcaire, entrent dans la composition du ciment dans une proportion de sa masse comprise entre 25 et 36 %, et
- de cendres volantes (fillers) qui entrent dans la composition du ciment dans une proportion de sa masse comprise entre 0.1 et 5 %.

Cette invention sera bien comprise à l'aide de la description ci-après faite à titre d'exemple non limitatif.

La fabrication de la pierre artificielle selon l'invention exige la mise en oeuvre de granulats et d'un liant.

Classiquement, d'une part, les granulats sont obtenus par concassage de roche et, d'autre part, le liant met en oeuvre de l'eau et du ciment.

De manière remarquable, d'une part, le liant comprend des particules qui, dites fines, résultent du concassage de la roche utilisée pour la production des granulats et, d'autre part, il met en oeuvre un ciment composé :
- de clinkers qui, notamment constitués de chaux vive, de silice, d'alumine, d'oxyde de fer, de magnésie, entrent dans la composition du ciment dans une proportion de sa masse comprise entre 36 et 57 %,
- de laitier qui, notamment constitué de chaux vive, de silice, d'alumine, entre dans la composition du ciment dans une proportion de sa masse comprise entre 15 et 27 %,
- de pouzzolanes qui, constitués à base d'une roche sédimentaire silico-alumino-calcaire, entrent dans la composition du ciment dans une proportion de sa masse comprise entre 25 et 36 %, et
- de cendres volantes (fillers) qui entrent dans la composition du ciment dans une proportion de sa masse comprise entre 0.1 et 5 %.

De manière remarquable, le dosage de ciment dans le liant est tel qu'il intervient pour une masse comprise entre deux cents et cinq cents kilogrammes par mètre cube de mélange agrégat-liant.

De manière préférentielle, le dosage de ciment dans le liant est tel qu'il intervient pour une masse d'au moins trois cent cinquante kilogrammes par mètre cube de mélange agrégat-liant.

De manière remarquable :
- les clinkers sont constitués de 65 % de chaux vive, de 24 % de silice, de 6 % d'alumine, de 3 % d'oxyde de fer et de 2 % de magnésie, et
- le laitier est constitué de 45 % de chaux vive, 30 % de silice et de 25 % d'alumine.

De manière encore remarquable :
- les clinkers entrent dans la composition du ciment dans une proportion de sa masse comprise entre 46 et 47 %,
- le laitier entre dans la composition du ciment dans une proportion de sa masse comprise entre 20 et 22 %,
- les pouzzolanes entrent dans la composition du ciment dans une proportion de sa masse comprise entre 30 et 31 %, et
- les cendres volantes (fillers) entrent dans la composition du ciment dans une proportion de sa masse comprise entre 2 et 3 %.

De manière remarquable, le classement granulaire du granulat utilisé est compris entre 0,2 et 0,4, c'est à dire que le diamètre des granulats est compris entre deux et quatre millimètres.

De manière préférentielle, le classement granulaire du granulat utilisé est de 0,3, c'est à dire que le diamètre des granulats n'excède pas trois millimètres.

## Revendications

1. Composition de liant pour la fabrication d'un matériau de construction qui, réalisé à base de granulats de roche naturelle, s'apparente à de la pierre bleue,
les granulats étant obtenus par concassage de roche et le liant mettant en oeuvre de l'eau et du ciment,
cette composition étant **CARACTERISEE** en ce que, d'une part, le liant comprend des particules qui, dites fines, résultent du concassage de la roche utilisée pour la production des granulats et, d'autre part, le liant met en oeuvre un ciment composé :
- de clinkers qui, notamment constitués de chaux vive, de silice, d'alumine, d'oxyde de fer, de magnésie, entrent dans la composition du ciment dans une proportion de sa masse comprise entre 36 et 57 %,
- de laitier qui, notamment constitué de chaux vive, de silice, d'alumine, entre dans la composition du ciment dans une proportion de sa masse comprise entre 15 et 27 %,
- de pouzzolanes qui, constitués à base d'une roche sédimentaire silico-alumino-calcaire, entrent dans la composition du ciment dans une proportion de sa masse comprise entre 25 et 36 %, et
- de cendres volantes (fillers) qui entrent dans la composition du ciment dans une proportion de sa masse comprise entre 0.1 et 5 %.

2. Composition de liant selon la revendication 1 **caractérisée** en ce que le dosage de ciment dans le liant est tel qu'il intervient pour une masse comprise entre deux cents et cinq cents kilogrammes par mètre cube de mélange agrégat-liant.

3. Composition de liant selon la revendication 1 ou 2 **caractérisée** en ce que le dosage de ciment dans le liant est tel qu'il intervient pour une masse d'au moins trois cent cinquante kilogrammes par mètre cube de mélange agrégat-liant.

4. Composition selon l'une quelconque des revendications 1 à 3 **caractérisée** en ce que :
- les clinkers sont constitués de 65 % de chaux vive, de 24 % de silice, de 6 % d'alumine, de 3 % d'oxyde de fer et de 2 % de magnésie, et
- le laitier est constitué de 45 % de chaux vive, 30 % de silice et de 25 % d'alumine.

5. Composition de liant selon l'une quelconque des revendications 1 à 4 **caractérisée** en ce que
- les clinkers entrent dans la composition du ciment dans une proportion de sa masse comprise entre 46 et 47 %,
- le laitier entre dans la composition du ciment dans une proportion de sa masse comprise entre 20 et 22 %,
- les pouzzolanes entrent dans la composition du ciment dans une proportion de sa masse comprise entre 30 et 31 %, et
- les cendres volantes (fillers) entrent dans la composition du ciment dans une proportion de sa masse comprise entre 2 et 3 %.

6. Composition de liant selon la revendication 2 **caractérisée** en ce que le classement granulaire du granulat utilisé est compris entre 0,2 et 0,4, c'est à dire que le diamètre des granulats est compris entre deux et quatre millimètres.

7. Composition de liant selon la revendication 5 **caractérisée** en ce que le classement granulaire du granulat utilisé est de 0,3, c'est à dire que le diamètre des granulats n'excède pas trois millimètres.

## Claims

1. A binder composition for the production of a building material which is formed on the basis of natural stone aggregates and resembles blue stone, the aggregates being obtained by crushing stone, and the binder comprising water and cement, this composition being characterised in that firstly, the binder comprises particles, known as fines, which result from the crushing of the stone used in the production of the aggregates, and secondly, the binder comprises a cement composed of:
- clinker, chiefly comprising quicklime, silica, alumina, iron oxide and magnesia and contained in the cement composition in a proportion of between 36% and 57% by weight;
- slag, chiefly comprising quicklime, silica and alumina and contained in the cement composition in a proportion of between 15% and 27% by weight;
- pozzolana, formed on the basis of a silico-alumino-calcareous sedimentary rock and contained in the cement composition in a proportion of between 25% and 36% by weight, and
- flying ash (fillers) contained in the cement composition in a proportion of between 0.1% and 5% by weight.

2. A binder composition according to claim 1, characterised in that the proportion of cement in the binder is such that it has a mass of between two hundred and five hundred kilograms per cubic metre of aggregate-binder mixture.

3. A binder composition according to claim 1 or 2, characterised in that the proportion of cement in the binder is such that it has a mass of at least three hundred and fifty kilograms per cubic metre of aggregate-binder mixture.

4. A composition according to any one of claims 1 to 3, characterised in that:
- the clinker comprises 65% quicklime, 24% silica, 6% alumina, 3% iron oxide and 2% magnesia, and
- the slag comprises 45% quicklime, 30% silica and 25% alumina.

5. A binder composition according to any one of claims 1 to 4, characterised in that:
- the clinker is contained in the cement composition in a proportion of between 46% and 47% by weight;
- the slag is contained in the cement composition in a proportion of between 20% and 22% by weight;
- the pozzolana is contained in the cement composition in a proportion of between 30% and 31% by weight, and
- the flying ash (fillers) is contained in the cement composition in a proportion of between 2% and 3% by weight.

6. A binder composition according to claim 2, characterised in that the particle classification of the aggregate used is between 0.2 and 0.4, i.e. the diameter of the particles is between two and four millimetres.

7. A binder composition according to claim 5, characterised in that the particle classification of the aggregate used is 0.3, i.e. the diameter of the particles does not exceed three millimetres.

## Patentansprüche

1. Bindemittel-Zusammensetzung zur Herstellung eines Baustoffes, welches bei Ausführung auf der Grundlage eines Granulats aus natürlichem Gestein das Aussehen eines blauen Steins aufweist,
wobei die Granulate durch Brechen des Gesteins und des Bindemittels unter Einsatz von Wasser und Zement gebildet werden,
dadurch **GEKENNZEICHNET**, daß einerseits das Bindemittel Teilchen enthält, die sich als sogenannte Feinteilchen beim Brechen des zur Herstellung der Granulate verwendeten Gesteins ergeben, und bei dem Bindemittel andererseits ein Zement eingesetzt wird, welcher sich aus folgenden Stoffen zusammensetzt:
- Zementklinker, die insbesondere aus ungelöschtem Kalk, Kieselerde, Tonerde, Eisenoxid, und Magnesia bestehen und dabei in der Zementzusammensetzung in einem Massenanteil zwischen 36 und 57 % vorhanden sind,
- Schlacke, die insbesondere aus ungelöschtem Kalk, Kieselerde und Tonerde besteht und in der Zementzusammensetzung in einem Massenanteil zwischen 15 und 27 % vorhanden ist,
- Puzzolane, die auf der Grundlage eines Sedimentgesteins vom Kieselerde-Tonerde-Kalksteintyp zusammengesetzt sind und in der Zementzusammensetzung in einem Massenanteil zwischen 25 und 36 % vorhanden sind, und
- Flugaschen (Füllstoffe), welche in der Zementzusammensetzung in einem Massenanteil zwischen 0,1 und 5 % vorhanden sind.

2. Bindemittel-Zusammensetzung nach Anspruch 1, dadurch gekennzeichnet, daß die Zugabe des Zements in dem Bindemittel so gehalten ist, daß er für eine Masse zwischen zweihundert und fünfhundert Kilogramm pro Kubikmeter des Aggregat-Bindemittel-Gemisches berücksichtigt ist.

3. Bindemittel-Zusammensetzung nach Anspruch 1 oder 2, dadurch **gekennzeichnet**, daß die Zugabe des Zements in dem Bindemittel so gehalten ist, daß er für eine Masse von mindestens dreihundertfünfzig Kilogramm pro Kubikmeter des Aggregat-Bindemittel-Gemisches berücksichtigt ist.

4. Bindemittel-Zusammensetzung nach einem der Ansprüche 1 bis 3, dadurch **gekennzeichnet**, daß:
- die Klinker zu 65 % aus ungelöschtem Kalk, zu 24 % aus Kieselerde, zu 6 % aus Tonerde, zu 3 % aus Eisenoxid und zu 2 % aus Magnesia bestehen, und
- die Schlacke zu 45 % aus ungelöschtem Kalk, zu 30 % aus Kieselerde und zu 25 % aus Tonerde besteht.

5. Bindemittel-Zusammensetzung nach einem der Ansprüche 1 bis 4, dadurch **gekennzeichnet**, daß
- die Klinker in der Zementzusammensetzung in einem Massenanteil zwischen 46 und 47 % vorhanden sind,
- die Schlacke in der Zementzusammensetzung in einem Massenanteil zwischen 20 und 22 % vorhanden sind,
- die Puzzolane in der Zementzusammensetzung in einem Massenanteil zwischen 30 und 31 % vorhanden sind, und
- die Flugaschen (Füllstoffe) in der Zementzusammensetzung in einem Massenanteil zwischen 2 und 3 % vorhanden sind.

6. Bindemittel-Zusammensetzung nach Anspruch 2, dadurch **gekennzeichnet**, daß Klassierung des verwendeten Granulats nach Körnung zwischen 0,2 und 0,4 liegt, d.h. daß der Durchmesser der Granulatstoffe zwischen zwei und vier Millimeter beträgt.

7. Bindemittel-Zusammensetzung nach Anspruch 5, dadurch **gekennzeichnet**, daß die Klassierung des verwendeten Granulats nach Kömung bei 0,3 liegt, d.h. daß der Durchmesser der Granulatstoffe drei Millimeter nicht überschreitet.
